# EUROPEAN PATENT APPLICATION

(11) **EP 3 530 379 A1**
(43) Date of publication of application: **28.08.2019**
(21) Application number: 19157035.7
(22) Date of filing: 13.02.2019
(51) Int. Cl.: B22F 3/00, B33Y 70/00, B33Y 10/00, C22C 1/04, C22C 21/00

(54) **METHODS FOR ADDITIVELY MANUFACTURING TURBINE ENGINE COMPONENTS VIA BINDER JET PRINTING WITH ALUMINUM-IRON-VANADIUM-SILICON ALLOYS**

(30) Priority: 21.02.2018 US 201815901193
(71) Applicant: Honeywell International Inc., Morris Plains, NJ New Jersey 07950 (US)
(72) Inventor: GODFREY, Donald G., Morris Plains, NJ New Jersey 07950 (US); BAUGHMAN, Brian G., Morris Plains, NJ New Jersey 07950 (US); MADER, Morgan A., Morris Plains, NJ New Jersey 07950 (US)
(74) Representative: Houghton, Mark Phillip

(57) **Abstract**

Methods for manufacturing an article include providing a three-dimensional computer model of the article and providing a metal alloy in powdered form. The metal alloy is an aluminum-iron-vanadium-silicon alloy. The powdered form includes a grain size range of about 5 to about 22 microns and a d50 grain size average of about 10 to about 13 microns. The methods further include, at a binder jet printing apparatus, supplying the metal alloy and loading the three-dimensional model, and, using the binder jet printing apparatus, manufacturing the article in accordance with the loaded three-dimensional model in a layer-by-layer manner with the supplied metal alloy. A liquid binder is applied at each layer, and each layer has a thickness of about 10 to about 150 microns. The methods avoid remelting of the metal alloy and avoid metal alloy cooling rates of greater than about 100 °F per minute.

## Description

### TECHNICAL FIELD

The present disclosure generally relates to methods of manufacturing components using metal alloys. More particularly, the present disclosure relates to additively manufactured turbine components using binder jet printing with aluminum-iron-vanadium-silicon alloys.

### BACKGROUND

In the context of gas turbine engines, the need for lighter weight components and higher gas turbine engine operating temperatures has created a need for aluminum to replace steels and titanium in the 250 °F to 600 °F mid-temperature operating range. Aluminum-iron-vanadium-silicon alloys, such as aluminum alloy 8009 (Al-8009), have been shown to be capable of operating at up to 600 °F and able to withstand excursions up to 800 °F. Accordingly, Al-8009 and similar alloys could be substituted for titanium in the main and trim bleed valves in gas turbine engines, which would result in a considerable cost and weight reduction.

Accordingly, it is desirable to provide improved methods for manufacturing components from Al-Fe-V-Si alloys. Furthermore, other desirable features and characteristics of the present invention will become apparent from the subsequent detailed description and the appended claims, taken in conjunction with the accompanying drawings.

### BRIEF SUMMARY

According to various embodiments, exemplary methods for manufacturing an article include providing a three-dimensional computer model of the article and providing a metal alloy in powdered form. The metal alloy is an aluminum-iron-vanadium-silicon alloy. The powdered form includes a grain size range of about 5 to about 22 microns and a d50 grain size average of about 10 to about 13 microns. The exemplary methods further include, at a binder jet printing apparatus, supplying the metal alloy and loading the three-dimensional model, and, using the binder jet printing apparatus, manufacturing the article in accordance with the loaded three-dimensional model in a layer-by-layer manner with the supplied metal alloy. A liquid binder is applied at each layer, and each layer has a thickness of about 10 to about 150 microns. Still further, the exemplary methods include performing one or more post-print processes selected from the group of: curing, powder removal, de-binding, sintering, hot isostatic pressing (HIP), and heat treating. The methods avoid remelting of the metal alloy and avoid metal alloy cooling rates of greater than about 100 °F per minute. For example, the exemplary methods avoid the use of directed energy beam additive manufacturing processes such as electron beam melting (EBM) and direct metal laser fusion (DMLF). The articles thus manufactured may be used for main and/or trim bleed valves in gas turbine engines. Gas turbine engines find use in various vehicles, such as aircraft.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### DESCRIPTION OF THE DRAWINGS

The exemplary embodiments will hereinafter be described in conjunction with the following drawing figures, wherein like numerals denote like elements, and wherein:
FIG. 1A illustrates a prior art planar flow casting (PFC) type melt spin casting (MSC) process, which has previously been used in the manufacture of Al-Fe-V-Si alloy components;
FIG. 1B is a flow diagram illustrating the steps in a prior art process for forming components with dispersion-strengthened aluminum alloys, such as Al-Fe-V-Si alloys;
FIG. 2 illustrates an exemplary binder jet printing apparatus, in the process of manufacturing an article, which is suitable for use with embodiments of the present disclosure; and
FIG. 3 is a process flow diagram illustrating method for manufacturing an article in accordance with some embodiments of the present disclosure.

### DETAILED DESCRIPTION

The following detailed description is merely exemplary in nature and is not intended to limit the inventive subject matter or the application and uses of the inventive subject matter. Furthermore, there is no intention to be bound by any theory presented in the preceding background or the following detailed description.

### Introduction

Al-Fe-V-Si alloy components require a multi-step process that includes rapid solidification ribbon casting, ribbon pulverizing, powder canning, hot isostatic pressing (HIP), extrusion, and forging to generate and maintain its unique microstructure and material properties. It has been found that the need for extensive hot working by extrusion and forging also limits the size and complexity of parts that can be practicably produced from the alloy.

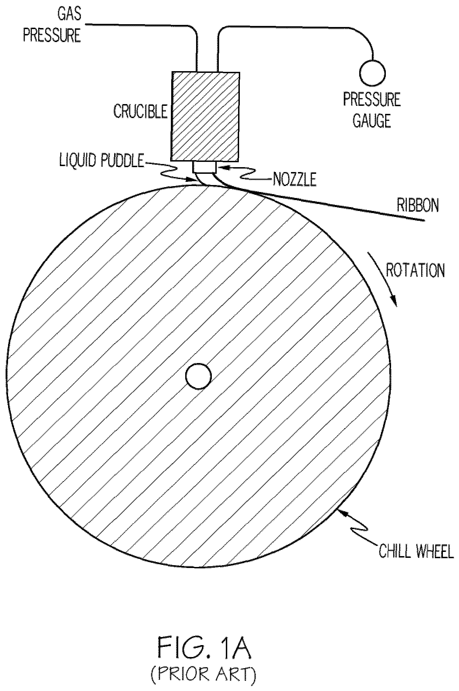

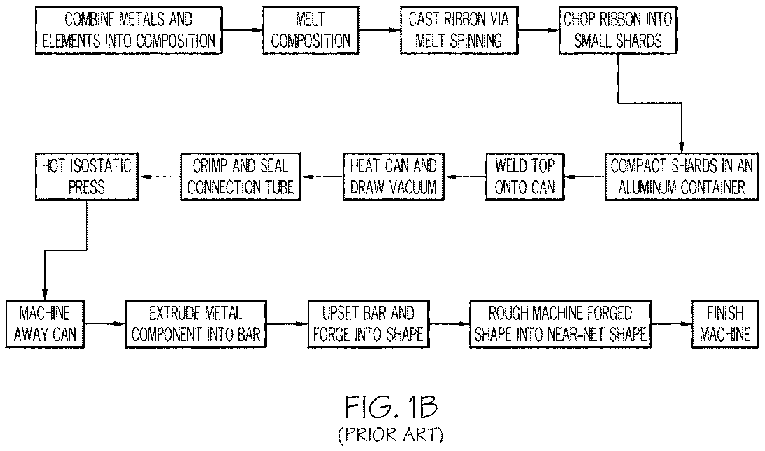

It has been observed that melt spinning has been the only practical means of producing solidification cooling rates high enough, ∼10⁶ °F/second, to form the desired microstructure in this material. Melt spinning processes produce thin (∼0.001") alloy ribbons by impinging a molten metal stream onto a rapidly spinning, water cooled wheel, as illustrated in FIG. 1A (showing a planar flow casting (PFC) type melt spinning process). In order to produce useful products, the alloy ribbons must be broken up and then consolidated and shaped using powder processing processes such as hot isostatic pressing, extrusion, and forging, as illustrated in FIG. 1B.

When the Al-Fe-V-Si alloy is melt spun, the rapid solidification produces enhanced solubility of iron, vanadium, and silicon, and allows for the formation of a very fine dispersion of Al(Fe,V) silicides, which is a very effective strengthening mechanism. However, it has been observed that the production of useful components from the rapidly solidified ribbons or flakes involves a series of manufacturing process steps that are time consuming and expensive (see FIG. 1B).

In order to avoid these steps, one prior art approach uses additive manufacturing processes, such as direct metal laser sintering (DMLS) or electron beam melting (EBM), which can be used to produce components directly from atomized Al-Fe-V-Si alloy powder. The DMLS process may allow for the elimination of several expensive manufacturing processes associated with producing parts from MS ribbons, in addition to having more design freedom. The rapid cooling of the Al-Fe-V-Si alloy via the DMLS process has been thought to allow for the manufacturing of components directly from the alloy powder material, built up by using a scanning laser to melt and solidify very thin (less than 0.001") layers of powder. The cooling rates achieved by utilizing this technology are as high as 10⁷ °F/second (depending upon build geometry, laser focal parameters, laser power and laser scanning speed), thus in theory producing the desired microstructure directly in the part without the costs and complexities of the MCS processing. However, it has been found that using DMSL technology in this context introduces remelting of the previously atomized powder and thus puts the optimal rapidly solidified microstructure at risk of non-uniform solidification rates based on part cross section geometry.

In order to avoid the aforesaid remelting that occurs when using DMLS, the present disclosure utilizes binder jet printing (BJP) technology to produce near-net shape components directly from Al-Fe-V-Si alloys. Using BJP technology enables the component to be formed layer by layer without the application of heat, thus avoiding many of the deficiencies in the prior art utilizing directed energy method, which result in remelting and possible non-uniform solidification rates. The BJP process involves building or printing components layer by layer derived from an original 3D or CAD file. The BJP process employed in the present disclosure uses two materials: a Al-Fe-V-Si metal powder based material and a binder. The binder is applied as a liquid and functions as an adhesive between two metal powder layers. The printer passes over the build surface and deposits the binder on relevant build areas based on information from the original 3D or CAD file. The printing process is repeated layer by layer until the component is formed in accordance with the original 3D or CAD file.

Because printing and binding of the metal powder occurs at room temperatures, there are no remelting as occurs when utilizing laser based or electron beam based powder bed fusion methods. Furthermore, the present disclosure enables the production of complex geometries in a single operation without tooling and enables detailed near-net geometric features that prior art processing methods cannot produce. In particular, the present disclosure utilizes powders that are relatively small in grain size, such as a grain size range of about 5 to about 22 microns and a d50 grain size average of about 10 to about 13 microns, which results in finer detail in the finished printed component.

Furthermore, unlike DMLS or EBM methods, the presently-described methods utilize no directed energy beams to create a component from Al-Fe-V-Si alloys. Rather, the exemplary methods utilize a binder jet printing free-form additive manufacturing process to deposit a binder and the metal powder across the surface of the build plane to build a component by applying one layer of powder and one layer of binder per pass. Thus, the remelting and non-uniform solidification rates are avoided. In addition, distortion from powder bed process temperatures are eliminated, and support structures to minimize build cracking from thermal gradients are no longer needed. This results in more economical builds and in more robust builds over the prior art methods. Moreover, the present disclosure reduces the surface roughness of the built components, thus eliminating the need for exterior and/or interior surface finishing. Furthermore, the present disclosure enables parts to be formed closer to near-net where appropriate, which eliminates expensive machining costs associated with prior art post-build processes.

### Al-Fe-V-Si Alloy

Exemplary methods for manufacturing an article include providing a metal alloy in powdered form. The metal alloy is an aluminum-iron-vanadium-silicon alloy. Al-Fe-V-Si alloys contain a uniform dispersion of stable (up to about 350 °C), nanometer scale silicides with a composition of about Al₁₂(Fe,V)₃Si in an aluminum solid solution matrix. Al-Fe-V-Si alloys have been developed that have mechanical properties comparable to titanium alloys up to temperatures of around 350 °C and can, because of their lower density - 2.9 compared to 4.5g/cm³ - result in significant weight savings in several gas turbine engine applications.

Alloys suitable for use in the process of the present disclosure are the rapidly solidified high-temperature aluminum alloys disclosed in US 4,729,790, US 4,828,632, and US 4,878,967. Such alloys have a composition of the formula Al_{bal}FeₐSi_{b}X_{c}, wherein X is at least one element selected from the group consisting of Mn, V, Cr, Mo, W, Nb, Ta; "a" ranges from 2.0 to 7.5 at% (atomic percent); "b" ranges from 0.5 to 3.0 at%; "c" ranges from 0.05 to 3.5 at%, and the balance is aluminum plus incidental impurities, with the proviso that the ratio [Fe + X]:Si is within the range from about 2.0:1 to 5.0:1.

The alloys used in this disclosure are preferably based on Al-Fe-V-Si. The Al-Fe-V-Si alloy in accordance with the present disclosure may be the Al-8009 alloy. Accordingly, Al-Fe-V-Si alloys that may be used in accordance with some embodiments of the present disclosure may be characterized by the following composition (TABLE 1), in weight-%:

**TABLE 1**

| Element | Min. Content | Max. Content |
|---|---|---|
| Aluminum | 86 | 89 |
| Iron | 8.4 | 8.9 |
| Silicon | 1.6 | 1.9 |
| Vanadium | 1.1 | 1.5 |
| Oxygen | 0 | 0.16 |
| Zinc | 0 | 0.25 |
| Titanium | 0 | 0.10 |
| Chromium | 0 | 0.10 |
| Manganese | 0 | 0.10 |
| Other (B, P, S, C) (each) | 0 | 0.05 |

Al-Fe-V-Si alloys in accordance with other embodiments of the present disclosure may be characterized by the following composition (TABLE 2), in weight-%:

**TABLE 2**

| Element | Min. Content | Max. Content |
|---|---|---|
| Aluminum | 87 | 88 |
| Iron | 8.5 | 8.8 |
| Silicon | 1.7 | 1.9 |
| Vanadium | 1.2 | 1.4 |
| Oxygen | 0 | 0.16 |
| Zinc | 0 | 0.25 |
| Titanium | 0 | 0.10 |
| Chromium | 0 | 0.10 |
| Manganese | 0 | 0.10 |
| Other (B, P, S, C) (each) | 0 | 0.05 |

The powdered form of the Al-Fe-V-Si alloy is produced by combining the various constituents (metals and other elements) of the alloy into a mixture, melting the mixture, and atomizing the melted mixture to form a powder, a process which is well-known in the art. The powdered form suitable for use in accordance with embodiments of the present disclosure may be characterized by a grain size range of about 5 to about 22 microns and a d50 grain size average of about 10 to about 13 microns, such as a grain size of about 10 to about 17 microns and a d50 grain size average of about 11 to about 12 microns. Powders that are characterized by this relatively small in grain size enable finer detail in the finished printed component.

### Binder Jet Printing

The BJP process involves building or printing components layer by layer derived from an original 3D or CAD file. The BJP process employed in the present disclosure uses two materials: a Al-Fe-V-Si metal powder based material and a binder. The binder is applied as a liquid and functions as an adhesive between two metal powder layers. The printer passes over the build surface and deposits the binder on relevant build areas based on information from the original 3D or CAD file. The printing process is repeated layer by layer until the component is formed in accordance with the original 3D or CAD file.

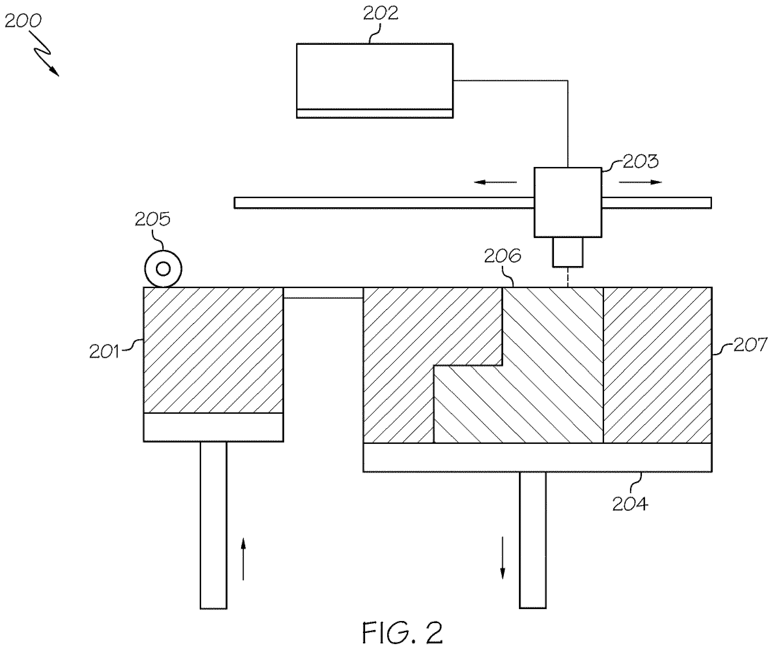

FIG. 2 illustrates an exemplary binder jet printing apparatus 200, in the process of manufacturing an article, which is suitable for use with embodiments of the present disclosure. The binder jet printing apparatus 200 uses two materials; Al-Fe-V-Si metal powder based material 201 and liquid binder 202, which may be an organic or inorganic material, such as those used in MIM technologies. The liquid binder 202 acts as an adhesive between powder (201) layers. The binder 202 is usually in liquid form and the build material 201 in powder form. A print head 203 moves horizontally along the x and y axes (left/right arrows) of the apparatus 200. A roller 205 deposits a layer of powder build material 201 and the print head 203 deposits the binder 202. This is performed in alternating order to form the various layers of the build. After each layer, the article 206 being printed is lowered (up/down arrows) on its build platform 204. The article 206 being printed is self-supported within powder bed 207 and is removed from the unbound powder once completed.

In operation, the binder jet printing apparatus 200 operates in the following manner: First, the powder material 201 is spread over the build platform 204 using the roller 205. Next, the print head 203 deposits the binder adhesive 202 on top of the powder 201 where required. Next, the build platform 204 is lowered by the article's (206) layer thickness, which may be from about 10 to about 150 microns, such as from about 10 to about 100 microns, and for example from about 10 to about 50 microns. Next, another layer of powder 201 is spread over the previous layer. The article 206 is formed where the powder 201 is bound to the liquid binder 202. The unbound powder 201 remains in position surrounding the article 206. The process is repeated until the entire article 206 has been made.

Binder jet printing utilizes no directed energy beams to create the article 206 from Al-Fe-V-Si alloys. This process has the advantage of being made from powder that only sees a single melt cycle, during atomization of the powder. Thus, the methods obtain rapid and uniform cooling in all the powder, and they maintain the rapidly-solidified microstructure that lends the Al-Fe-V-Si alloy its high-temperature properties. In addition, distortion from powder bed process temperatures are eliminated, and support structures to minimize build cracking from thermal gradients are not needed. Binder jet printing is performed at room temperature. Moreover, binder jet printing does not require the use of a shielding gas, and accordingly there is reduced risk of gas entrapment in the finished article 206. Still further, there is no remelting of the article 206 after it has been manufactured.

### Method of Manufacture

According to various embodiments, exemplary methods for manufacturing an article include providing a three-dimensional computer model of the article. The exemplary methods further include, at the binder jet printing apparatus 200, supplying the Al-Fe-V-Si metal alloy and loading the three-dimensional model, and, using the binder jet printing apparatus, manufacturing the article in accordance with the loaded three-dimensional model in a layer-by-layer manner with the supplied metal alloy, as described above. Still further, the exemplary methods include performing one or more post-print processes selected from the group of: curing, powder removal, de-binding, sintering, hot isostatic pressing (HIP), and heat treating.

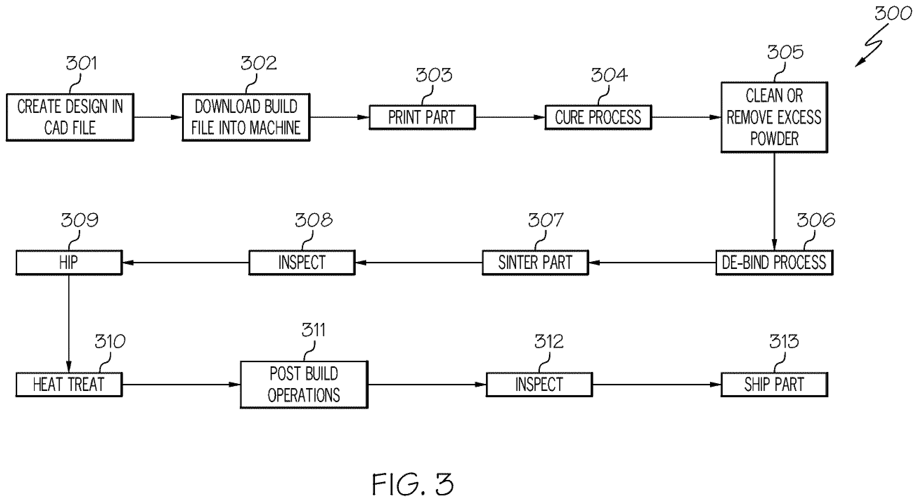

FIG. 3 is a process flow diagram illustrating a method 300 for manufacturing an article in accordance with some embodiments of the present disclosure. Method 300 begins at step 301, where a 3D or CAD file of the article is created. In some embodiments, the article may be a turbine engine component that is subjected to high temperatures during operation, such as a main bleed valve and/or a trim bleed valve, etc. In other embodiments, the article may be a component for use in any other system. The present disclosure is not limited to turbine engine components. At step 302, a build file is generated from the 3D or CAD file and is downloaded into a binder jet printing apparatus.

Method 300 continues at step 303 with the fabrication of the article at the binder jet printing apparatus, as described above. After fabrication, a curing process 304 is employed to cure the article, which may be performed at an elevated temperature over a period of time. Method 300 then continues at step 305 wherein the cured article is cleaned and/or has any excess powder removed. Thereafter, a de-binding process 306 may be employed to remove the residual binder from the article. The nature of de-binding depends on the type of binder employed, but may generally involve the use of subjecting the article to elevated temperatures, such as at least about 200 °F, and/or reduced pressures.

Method 300 continues at step 307 where the article is sintered. Sintering involves the use of elevated temperatures, such as at least about 1100 °F, to coalesce the powdered material into a solid mass, but without liquefaction. Sintering ensures adequate densification of the article. After sintering, the article may be inspected at step 308 to ensure that the solidified mass meets the appropriate design specifications and tolerances. As is conventional with turbine engine components, the article may thereafter be subjected to hot-isostatic pressing (HIP) at step 309 to remove any internal defects of faults, and/or further heat treated at step 310 as necessary to achieve an appropriate material phase constituency of the article.

Method 300 thereafter proceeds to any applicable post-build operations at step 311, such as machining the article to final specifications. The completed article may thereafter be inspected at step 312. If the inspection reveals no defects, the article may be shipped at step 313 to an appropriate facility for assembling a gas turbine engine (or other system), as per its intended use. It is therefore noted that none of the method steps of method 300 employ the use of directed energy additive manufacturing processes, such as DMLS or EMB. As such, the method avoids remelting of the metal alloy and avoids metal alloy cooling rates of greater than about 100 °F per minute. Moreover, the disclosed methods allow the elimination of the consolidation, extrusion, and forging steps, and thus minimizes their potentially damaging effects on microstructure and properties of the alloy, thus producing parts with properties equal to or exceeding those of components produce via the conventional MS/powder processing route.

Accordingly, the present disclosure has provided methods that utilize binder jet printing technology to produce near-net shape components directly from Al-Fe-V-Si alloys. This process has the advantage of being made from powder that only sees a single melt cycle, during atomization of the powder. Thus, the methods obtain rapid and uniform cooling in all the powder, and they maintain the rapidly-solidified microstructure that lends the Al-Fe-V-Si alloy its high-temperature properties. In addition, distortion from powder bed process temperatures is eliminated, and support structures to minimize build cracking from thermal gradients are no longer needed. This results in more economical builds and in more robust builds. Furthermore, the present disclosure has provided methods that enable parts to be formed closer to near-net where appropriate, which eliminates expensive machining costs associated with prior art post-build processes.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof.

## Claims

1. A method for manufacturing an article, comprising:
providing a three-dimensional computer model of the article;
providing a metal alloy in powdered form, wherein the metal alloy is an aluminum-iron-vanadium-silicon alloy, wherein the powdered form comprises a grain size range of about 5-22 microns and a d50 grain size average of about 10-13 microns;
at a binder jet printing apparatus, supplying the metal alloy and loading the three-dimensional model; and
using the binder jet printing apparatus, manufacturing the article in accordance with the loaded three-dimensional model in a layer-by-layer manner with the supplied metal alloy, wherein a liquid binder is applied at each layer,
wherein the method avoids remelting of the metal alloy and avoids metal alloy cooling rates of greater than about 100 °F per minute.

2. The method of claim 1, wherein each layer of the supplied metal alloy has a thickness from about 10 to about 150 microns.

3. The method of claim 1, wherein each layer of the supplied metal alloy has a thickness from about 10 to about 100 microns.

4. The method of claim 1, wherein each layer of the supplied metal alloy has a thickness from about 10 to about 50 microns.

5. The method of claim 1, further comprising performing curing of the article at a temperature of at least about 200 °F.

6. The method of claim 1, further comprising performing sintering of the article at a temperature of at least about 1100 °F.

7. The method of claim 1, further comprising performing one or more post-print processes selected from the group consisting of: hot isostatic pressing (HIP), heat treating, and machining.

8. The method of claim 1, wherein the method avoids the use of directed energy beam additive manufacturing processes such as electron beam melting (EBM) and direct metal laser fusion (DMLF).

9. The method of claim 1, wherein the article comprises a turbine engine component.

10. The method of claim 1, wherein the aluminum-iron-vanadium-silicon alloy comprises, by weight-%:
about 86 to about 89 percent aluminum;
about 8.4 to about 8.9 percent iron;
about 1.6 to about 1.9 percent silicon; and
about 1.1 to about 1.5 percent vanadium.

11. The method of claim 1, wherein the aluminum-iron-vanadium-silicon alloy comprises, by weight-%:
about 87 to about 88 percent aluminum;
about 8.5 to about 8.8 percent iron;
about 1.7 to about 1.8 percent silicon; and
about 1.2 to about 1.4 percent vanadium.

12. The method of claim 1, wherein the metal alloy in powdered form is produced by an atomization process.

13. The method of claim 1, wherein the method avoids the use of a shielding gas during the step of manufacturing the article in the layer-by-layer manner.

14. The method of claim 1, wherein the article is not remelted after the step of manufacturing the article in the layer-by-layer manner.

15. The method of claim 1, wherein the method excludes steps of consolidation, extrusion, and forging.
